# EUROPÄISCHE PATENTSCHRIFT

(11) **EP 0 363 515 B1**
(45) Veröffentlichungstag und Bekanntmachung des Hinweises auf die Patenterteilung: **20.01.1993**
(21) Anmeldenummer: 88117057.5
(22) Anmeldetag: 13.10.1988
(51) Int. Cl.: B60T 8/32

(54) **Verfahren zur Unterscheidung durchdrehender Räder eines Fahrzeuges von Triebstrangschwingungen**
Method of distinguishing the slipping of wheels from drive chain vibrations
Procédé pour distinguer le glissement des roues de véhicules des vibrations de la chaîne de transmission

(43) Veröffentlichungstag der Anmeldung: 18.04.1990
(73) Patentinhaber: SIEMENS AKTIENGESELLSCHAFT, 80333 München (DE)
(72) Erfinder: Kumpfmüller, Hans-Georg, Dipl.-Ing.FH., D-8405 Donaustauf (DE)

(56) Entgegenhaltungen:
- EP-A- 0 252 384
- EP-A- 0 262 602
- DE-A- 3 644 261
- DE-A- 3 729 963
- FR-A- 2 394 430
- GB-A- 2 151 732
- US-A- 4 521 856

## Beschreibung

Die Erfindung bezieht sich auf ein Verfahren zur Ermittlung durchdrehender Räder eines Fahrzeuges nach dem Oberbegriff des Patentanspruchs 1, und auf eine Vorrichtung zur Durchführung dieses Verfahrens.

Bekannt sind Verfahren (DE-OS 21 48 302), bei welchen als Bewegungsgröße die Drehzahl- oder Beschleunigungsdifferenz zwischen einem angetriebenen und einem nicht angetriebenen Rad, bezogen auf die Drehzahl oder Beschleunigung eines nicht angetriebenen Rades (= Schlupf), dient. Überschreitet diese Bewegungsgröße einen vorgegebenen Schwellwert, wird auf die Bremse eines durchdrehenden Rades oder auf die Antriebskraft des Fahrzeugmotors in einem das Durchdrehen des angetriebenen Rades verhindernden Sinn eingewirkt. Um zum Durchdrehen neigende Räder möglichst früh erkennen zu können, sollte diese Schwelle möglichst niedrig liegen. Dies kann jedoch dazu führen, daß Schwingungen im Antriebsstrang, die z. B. bei Gang- oder Lastwechsel oder bei Fahrbahnunebenheiten entstehen können, bereits Drehzahldifferenzen erzeugen, durch welche dieser Schwellwert überschritten wird.

Derartige Schwingungen im Antriebsstrang erzeugen Drehzahldifferenzen, die sich in den ersten hundert bis zweihundert Millisekunden nicht von denen durchdrehender Räder unterscheiden. Der zeitliche Verlauf des resultierenden Schlupfes der Antriebsräder ist sinusähnlich mit Frequenzen von ca. drei bis fünf Hertz. Ein Ausfiltern derart niederfrequenter Schwingungen scheidet wegen zu langer Filterzeiten aus. Ein Anheben des Schwellwertes hingegen verzögert das Erkennen durchdrehender Räder und damit den Beginn von Gegenmaßnahmen.

Aus EP-A-0 262 602 ist eine Regeleinrichtung zum Dämpfen von Triebstrangschwingungen in einem Fahrzeug bekannt. Die Geschwindigkeiten eines angetriebenen und eines nicht angetriebenen Rades werden ermittelt. Eine Drehzahlregelung für das angetriebene Rad ist vorgesehen, um eine Geschwindigkeitsabweichung gegenüber dem nicht angetriebenen Rad auszuregeln. Durch das wiederholte Anlegen und Lösen der Radbremsen können durch die Drehzahlregelung Triebstrangschwingungen verursacht werden. Wenn die zweite Ableitung der Geschwindigkeit des angetriebenen Rades einen Schwellwert überschreitet, wird das Vorhandensein von Triebstrangschwingungen angenommen und die Drehzahlregelung unterbrochen, um die Triebstrangschwingungen zu dämpfen.

Aufgabe der Erfindung ist es, ein Verfahren anzugeben, welches es erlaubt, die Empfindlichkeit der Erkennung durchdrehender Räder etwa beizubehalten und diese von Triebstrangschwingungen zu unterscheiden, so daß die Abgabe eines Signals nur bei durchdrehenden Rädern, aber nicht bei Triebstrangschwingungen erfolgt. Zweck der Erfindung ist es auch, eine Vorrichtung zur Durchführung dieses Verfahrens zu schaffen.

Diese Aufgabe wird durch den im Anspruch 1 definierten Gegenstand gelöst.

Als erste Bewegungsgröße dient im allgemeinen, wie bereits erwähnt, die auf die Drehzahl nl eines nicht angetriebenen Rades bezogene Drehzahldifferenz zwischen einem angetriebenen und dem nicht angetriebenen Rad (Schlupf des angetriebenen Rades). Anstelle der Drehzahl kann auch die Radbeschleunigung treten.

Als zweite Bewegungsgröße wird bei der Erfindung vorzugsweise der Radumfangsweg, der in einem von einem Takt bestimmten Taktinvall zurückgelegt wird (Radumfangsgeschwindigkeit), verwendet. Es kann aber auch die Radbeschleunigung verwendet werden.

Bei der Erfindung wird davon ausgegangen, daß der Antriebsstrang bei einer trockenen, griffigen Fahrbahn und gut haftenden Reifen des Fahrzeuges eine bestimmte frequenzunabhängige Maximalverdrehung der angetriebenen Räder gegenüber den nicht angetriebenen Rädern zuläßt. Erst ein Überschreiten dieser Maximalverdrehung wird als Durchdrehen der Antriebsräder gewertet. Ein daraufhin abgegebenes Steuersignal kann als Warnsignal für den Fahrer dienen oder für die Änderung des Antriebsmomentes eines angetriebenen Rades, für einen Eingriff ins Getriebe oder für die Zuschaltung weiterer angetriebener Räder usw. verwendet werden.

Die Erfindung wird am Beispiel eines Verfahrens zur Änderung des Antriebsmomentes eines angetriebenen Rades eines Fahrzeugs anhand der Figuren näher erläutert. Es zeigen:
- Fig. 1:: a) den Schlupfverlauf S bei einem durchdrehenden Rad und den Schlupfverlauf TS bei einer Triebstrangschwingung,
b) den Verlauf davon abgeleiteter Summen Sdw,
c) den Verlauf eines daraus resultierenden Steuersignals H,
- Fig. 2:: ein schematisches Blockschaltbild einer Vorrichtung zur Durchführung des Verfahrens und
- Fig. 3:: eine Alternative dazu.

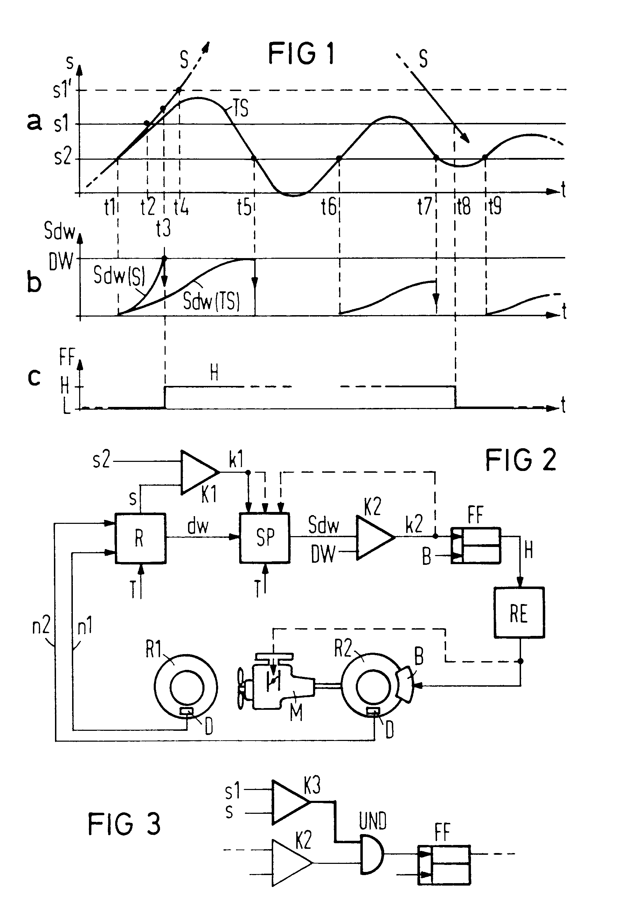

Die Diagramme in Fig. 1 sind schematisch und nicht maßstabsgerecht dargestellt. Das Teildiagramm a, bei welchem auf der Abszisse die Zeit und auf der Ordinate der Schlupf (erste Bewegungs größe) aufgetragen ist, zeigt den Unterschied zwischen dem Schlupfverlauf TS einer Triebstrangschwingung, die in Form einer gedämpften Schwingung verläuft, und dem Schlupfverlauf S eines durchdrehenden Rades, von welchem, wegen zu großer Amplituden, nur Anfang und Ende dargestellt ist. Desweiteren ist ein Schwell wert s1 dargestellt, bei dessen Überschreiten durch den Schlupf des angetriebenen Rades eine bekannte Regeleinrichtung einen Regelvorgang einleitet, um ein Durchdrehen dieses Rades zu verhindern. Dieser Schwellwert wird vom Schlupf S des durchdrehenden Rades im Zeitpunkt t2 überschritten. Hier würde also ein Regelvorgang zum Verhindern des Durchdrehens des Rades beginnen. Wie aus dem Teildiagramm a ersichtlich, wird dieser Schlupfschwellwert s1 kurz nach dem Zeitpunkt t2 auch vom Schlupfverlauf TS einer Triebstrangschwingung überschritten. Auch hier würde also ein Regelvorgang einsetzen, obwohl dies nicht erforderlich und nicht gewünscht ist. Es wäre nun möglich, den Schwellwert s1 auf den gestrichelt dargestellten Wert s1' anzuheben, der so hoch liegt, daß er vom Triebstrangschwingungen nicht mehr überschritten werden kann. Dies hätte jedoch den Nachteil, daß ein Regelvorgang zur Verhinderung des Durchdrehens des Rades erst im Zeitpunkt t4 beginnen könnte.

Für die Unterscheidung eines durchdrehenden Rades von einer Triebstrangschwingung wird unterhalb des Schwellwertes s1 ein Ansprechschwellwert s2 vorgegeben. Dieser wird so bemessen, daß ein Regelvorgang etwa beim Schwellwert s1 einsetzt, obwohl dieser Schwellwert selbst nicht bzw. nicht ausschließlich für das Einschalten der Regelung verwendet wird. Der Ansprechschwellwert s2 wird von den größer werdenden Schlupfwerten des angetriebenen Rades im Zeitpunkt t1 überschritten.

Es werden fortlaufend taktweise die Differenzen der in den Taktintervallen zurückgelegten Umfangswege (zweite Bewegungsgröße w) zwischen angetriebenem und nicht angetriebenem Rad derselben Fahrzeugseite ermittelt und ab dem Zeitpunkt t₁, in welchem der Ansprechschwellwert s₂ vom Schlupf des angetriebenen Rades überschritten wird aufsummiert. Dies ist im Teildiagramm b dargestellt, bei welchem auf der Abszisse wieder die Zeit und auf der Ordinate die Summe Sdw der Differenzen der pro Taktintervall zurückgelegten Umfangswege aufgetragen ist. Als Umfangsweg ist derjenige Teil des Radumfanges bezeichnet, welcher dem in einem Taktintervall überstrichenen Drehwinkel des Rades entspricht. Für ein schlupfbehaftetes Rad ist dieser Umfangsweg zwangsläufig größer als der eines nicht angetriebenen, freirollenden Rades.

Der zeitliche Verlauf der Summen dieser Differenzen ist für eine Triebstrangsschwingung durch die Kurve Sdw(TS) und für ein durchdrehendes Rad durch die Kurve Sdw(S) dargestellt. Für die Summen Sdw wird ein Maximalwert DW so festgelegt, daß er bei einer Triebstrangschwingung nicht erreicht wird, bei einem durchdrehenden Rad jedoch schnell überschritten wird. Dies geschieht umso eher, je glatter die Fahrbahn ist und je geringer die Haftwirkung der Fahrzeugreifen ist. Dies ist im Zeitpunkt t3 der Fall. Das Überschreiten des Maximalwertes DW durch die Summe Sdw ist also das Kriterium zur Unterscheidung durchdrehender Räder von Triebstrangschwingungen. Beim Erreichen oder Überschreiten des Maximalwertes DW wird ein Steuersignal H ausgegeben, welches im Teildiagramm c dargestellt ist. Bei diesem Teildiagramm ist auf der Abszisse wieder die Zeit aufgetragen. Auf der Ordinate sind zwei Einzelwerte H und L entsprechend den Zuständen, welche ein digitales Signal annehmen kann, eingetragen. Dieses Steuersignal H bewirkt einen Regelvorgang, der einem Durchdrehen des Rades entgegenwirken soll.

Eine Überwachung des Schlupfverlaufes des angetriebenen Rades ist nur so lange erforderlich, bis entweder der Maximalwert DW von der Summe Sdw(S) erreicht oder überschritten und ein Regelvorgang eingeleitet ist, oder bis der Schlupf des betrachteten Rades bei diesem Ausführungsbeispiel den Ansprechschwellwert s2 wieder unterschritten hat. Jeweils beim Eintreten eines der beiden Ereignisse wird deshalb die bis dahin erreichte Summe Sdw wieder gelöscht, d. h., auf den Wert Null gesetzt, was im Teildiagramm b zu den Zeitpunkten t3, t5 und t7 durch nach unten weisende Pfeile angedeutet ist. Ein erneuter Beginn einer Aufsummierung der ermittelten Differenzen erfolgt jeweils bei einem Wiederüberschreiten des Ansprechschwellwertes s2, was zu den Zeitpunkten t6 und t9 der Fall ist.

Das gemäß Teildiagramm c abgegebene Steuersignal H wird, wie dargestellt, beim Unterschreiten des Schwellwertes s1 zum Zeitpunkt t8 gelöscht. Es ist also vorhanden, solange ein Regelvorgang dauert, und kann entsprechend ausgewertet werden. Es kann aber auch beim Unterschreiten des Ansprechschwellwertes s2, oder eines anderen Wertes, oder nach einer vorgegebenen Dauer seit seinem Erscheinen wieder gelöscht werden.

Aus den Teildiagrammen a und b ist zu ersehen, daß beim Überschreiten des Schwellwertes s1 durch Triebstrangschwingungen TS, was zwischen den Zeitpunkten t2 und t5 sowie zwischen den Zeitpunkten t6 und t7 auftritt, bei Anwendung des beschriebenen Verfahrens keine Regelvorgänge ausgelöst werden, und daß andererseits ein Durchdrehen des Rades schnell erkannt werden kann.

Auch die in Fig. 2 gezeigte Vorrichtung bezieht sich, wie das beschriebene Verfahren, auf die Überwachung eines einzelnen angetriebenen Fahrzeugrades. Für die Überwachung des anderen angetriebenen Rades ist dann eine zweite Vorrichtung erforderlich, mit Ausnahme jener Teile, welche für beide gemeinsam eingesetzt werden können. Im Prinzip kann jedoch auch eine gemeinsame Vorrichtung für die Verarbeitung der Mittelwerte der von den angetriebenen und von den nicht angetriebenen Rädern abgeleiteten Größen eingesetzt werden.

Einer Recheneinheit R werden die Drehzahlen n2 des angetriebenen Fahrzeugrades R2 und n1 des nicht angetriebenen Fahrzeugrades R1, welche jeweils durch Raddrehzahlsensoren D ermittelt wurden, und ein Taktsignal T konstanter Frequenz zugeführt. Diese Recheneinheit R ermittelt in bekannter Weise die Geschwindigkeit der Räder, den Schlupf des angetriebenen Rades und die Differenzen dw der pro Taktintervall zurückgelegten Umfangswege beider Räder. Der ermittelte Schlupf s des angetriebenen Rades R2 wird einem ersten Komparator K1 zugeführt und in diesem mit dem Ansprechschwellwert s2 verglichen. Übersteigt der Schlupf diesen Schwellwert, so gibt der erste Komparator K1 ein Ausgangssignal k1 ab. Dieses Ausgangssignal k1 wird, zusammen mit dem Taktsignal T und den in der Recheneinheit R ermittelten Differenzen dw der Umfangswege einem summierenden Speicher SP zugeführt, in welchem die einzelnen Differenzwerte dw aufsummiert werden, sobald und solange das Ausgangssignal k1 des ersten Komparators K1 vorhanden ist. Der jeweilige Inhalt des Speichers SP, die ermittelte Summe Sdw, wird einem zweiten Komparator K2 zugeführt, in welchem sie mit dem vorgegebenen Maximalwert DW verglichen wird. Überschreitet die gespeicherte Summe diesen Maximalwert DW, so gibt der zweite Komparator K2 ein Ausgangssignal k2 ab, welches den Setzeingang einer bistabilen Kippstufe FF, beispielsweise einem RS-Flip-Flop, zugeführt wird. Ein Signal am Ausgang der Kippstufe FF bildet das Steuersignal H für eine nachfolgende Regeleinrichtung RE, die daraufhin im Sinne einer Änderung des Antriebmomentes dieses zum Druchdrehen neigenden Rades R2 - entweder über dessen Bremse B oder über den Fahrzeugmotor M - eingreift, um ein Durchdrehen des Rades zu verhindern.

Die Ausgangssignale k1 und k2 der beiden Komparatoren K1 und K2 können, wie durch gestrichelte Pfeile angedeutet, als Rücksetzsignale dem Speicher SP zugeführt werden und zur Rücksetzung der in ihm gespeicherten Summe Sdw verwendet werden. Dabei kann das Ausgangssignal k2 direkt und das Ausgangssignal k1 nach Invertierung dem Speicher SP zugeführt werden. Das Rücksetzen der Kippstufe FF kann entweder beim Unterschreiten des Schwellwertes s1 durch den Schlupf des angetriebenen Rades, wie dargestellt, oder nach einer bestimmten Dauer des Steuersignals H selbst, erfolgen (Signal B).

Fig. 3 zeigt eine Alternative zu der Ausführung nach Fig. 2. Soll gemäß Anspruch 4 das Steuersignal H ausgelöst werden, wenn die Summe Sdw den Maximalwert DW überschreitet und gleichzeitig die Bewegungsgröße s oberhalb des Schwellwertes s1 liegt, so ist ein dritter Komparator K3 vorzusehen, in welchem die Bewegungsgröße s mit dem Schwellwert s1 verglichen wird. Übersteigt sie diesen Schwellwert, so gibt der Komparator K3 ein Ausgangssignal ab, welches zusammen mit dem Ausgangssignal des Komparators K2 den Eingängen eines logischen UND-Gliedes zugeführt wird, dessen Ausgangssignal dann anstelle des Signals k2 aus Fig. 2 der Kippstufe FF zugeführt wird. Die zusätzlich erforderlichen Elemente sind in Fig. 3 in dicken Linien dargestellt.

## Patentansprüche

1. Verfahren zur Ermittlung durchdrehender Räder eines Fahrzeuges durch ein aus Bewegungsgrößen (Drehzahl, Geschwindigkeit, Schlupf oder Beschleunigung) der Räder ermitteltes Steuersignal (H), wobei eine erste Bewegungsgröße (s) aus den Drehzahlen mindestens eines angetriebenen und eines nicht angetriebenen Rades ermittelt und mit einem Schwellwert (s1) verglichen wird,
**dadurch gekennzeichnet**,
daß taktweise der Differenzwert (dw) zwischen einer dem angetriebenen und einer dem nicht angetriebenen Rad zugeordneten zweiten Bewegungsgröße (w) ermittelt wird,
daß die ermittelten Differenzwerte (dw) summiert werden, wenn die erste Bewegungsgröße (s) größer als ein Ansprechschwellwert (s2) ist,
daß die Summe (Sdw) der ermittelten Differenzwerte (dw) mit einem Maximalwert (DW) verglichen wird und
daß das Steuersignal (H) ausgelöst wird, wenn die Summe (Sdw) der Differenzwerte (dw) größer als der Maximalwert (DW) ist.

2. Verfahren nach Anspruch 1,
**dadurch gekennzeichnet,**
daß die Summe (Sdw) der ermittelten Differenzwerte (dw) auf den Wert Null gesetzt wird, wenn sie den Maximalwert (DW) überschreitet oder wenn eine von den Raddrehzahlen abgeleitete Größe einen vorgegebenen Wert unterschreitet.

3. Verfahren nach Anspruch 2,
**dadurch gekennzeichnet,**
daß die von den Raddrehzahlen abgeleitete Größe die erste Bewegungsgröße (s) ist und daß der zu unterschreitende vorgegebene Wert der Schwellwert (s1) oder der unterhalb des Schwellwertes (s1) liegende Ansprechschwellwert (s2) ist.

4. Verfahren nach Anspruch 1,
**dadurch gekennzeichnet,**
daß das Steuersignal (H) ausgelöst wird, wenn die Summe (Sdw) der ermittelten Differenzwerte (dw) den Maximalwert (DW) überschreitet und gleichzeitig die erste Bewegungsgröße (s) oberhalb des Schwellwertes (s1) liegt.

5. Verfahren nach Anspruch 1,
**dadurch gekennzeichnet,**
daß das Steuersignal (H) nach einer vorgegebenen Dauer gelöscht wird (Signal B).

6. Verfahren nach Anspruch 1,
**dadurch gekennzeichnet,**
daß das Steuersignal (H) gelöscht wird (Signal B), wenn die erste Bewegungsgröße (s) den Schwellwert (s1) oder den Ansprechschwellwert (s2) unterschreitet.

7. Verfahren nach Anspruch 1,
**dadurch gekennzeichnet,**
daß die zweite Bewegungsgröße (w) die Radgeschwindigkeit ist.

8. Verfahren nach Anspruch 1,
**dadurch gekennzeichnet,**
daß die zweite Bewegungsgröße (w) die Radbeschleunigung ist.

9. Vorrichtung zur Durchführung des Verfahrens nach Anspruch 1,
bestehend aus Mitteln zur Bestimmung eines Steuersignals (H) aus Bewegungsgrößen (Drehzahl, Geschwindigkeit, Schlupf oder Beschleunigung) der Räder, diese Mittel ermitteln eine erste Bewegungsgröße (s) aus den Drehzahlen mindestens eines angetriebenen und eines nicht angetriebenen Rades (R1, R2) und vergleichen dieses Signal mit einem ersten Schwellwert (s1)
**dadurch gekennzeichnet,**
daß ein erster Komparator (K1) vorgesehen ist, welcher die erste Bewegungsgröße (s) mit einem vorgegebenen Ansprechschwellwert (s2) vergleicht und ein Ausgangssignal (k1) abgibt, wenn die erste Bewegungsgröße (s) den Ansprechschwellwert (s2) überschreitet,
daß eine Recheneinheit (R) vorgesehen ist, welche taktweise (Takt T) die Differenzwerte (dw) zwischen den vom angetriebenen Rad und vom nicht angetriebenen Rad ermittelten zweiten Bewegungsgrößen (w) errechnet,
daß eine Speichereinheit (SP) vorgesehen ist, welche taktweise aus den von der Recheneinheit (R) errechneten Differenzwerten (dw) die Summe (Sdw) bildet,
daß ein zweiter Komparator (K2) vorgesehen ist, welcher die Summe (Sdw) mit einem vorgegebenen Maximalwert (DW) vergleicht,
daß die Summenbildung in der Speichereinheit (SP) vom Beginn eines Ausgangssignals (k1) des ersten Komparators (K1) bis zu seinem Ende oder bis zum Beginn eines Ausgangssignals (k2) des zweiten Komparators (K2) dauert und daß danach die in der Speichereinheit (SP) gebildete Summe (Sdw) gelöscht wird, und
daß eine Kippstufe (FF) vorgesehen ist, welche vom Ausgangssignal (k2) des zweiten Komparators (K2) gesetzt wird und dabei das Steuersignal (H) abgibt und welche beim Unterschreiten des Schwellwertes (s1) durch die erste Bewegungsgröße (s) oder nach einer vorgegebenen Dauer rückgesetzt wird (Signal B).

## Claims

1. Method of identifying the slipping of wheels of a vehicle by means of a control signal (H) obtained from movement variables (speed of revolution, speed, slip or acceleration) of the wheels, a first movement variable (s) being obtained from the speeds of revolution of at least one driven and one non-driven wheel and being compared with a threshold value (s1), characterised in that the differential value (dw) between a second movement variable (w) assigned to the driven wheel and one assigned to the non-driven wheel is obtained in a clocked fashion,
in that the obtained differential values (dw) are summed if the first movement variable (s) is greater than the response threshold value (s2),
in that the sum (Sdw) of the obtained differential values (dw) are compared with a maximum value (DW) and
in that the control signal (H) is triggered if the sum (Sdw) of the differential values (dw) is greater than the maximum value (DW).

2. Method according to Claim 1, characterised in that the sum (Sdw) of the obtained differential values (dw) is set to the value zero if it exceeds the maximum value (DW) or if a variable which is derived from the speeds of revolution of the wheels undershoots a predetermined value.

3. Method according to Claim 2, characterised in that the variable derived from the speeds of revolution of the wheel is the first movement variable (s) and in that the predetermined value to be undershot is the threshold value (s1) or the response threshold value (s2) lying below the threshold value (s1).

4. Method according to Claim 1, characterised in that the control signal (H) is triggered if the sum (Sdw) of the obtained differential values (dh) exceeds the maximum value (DW) and at the same time the first movement variable (s) lies above the threshold value (s1).

5. Method according to Claim 1, characterised in that the control signal (H) is cleared after a predetermined duration (signal B).

6. Method according to Claim 1, characterised in that the control signal (H) is cleared (signal B) if the first movement variable (s) undershoots the threshold value (s1) or the response threshold value (s2).

7. Method according to Claim 1, characterised in that the second movement variable (w) is the wheel speed.

8. Method according to Claim 1, characterised in that the second movement variable (w) is the wheel acceleration.

9. Device for carrying out the method according to Claim 1, consisting of means for determining a control signal (H) from movement variables (speed of revolution, speed, slip and acceleration) of the wheels, these means obtain a first movement variable (s) from the speeds of revolution of at least one driven and one non-driven wheel (R1, R2) and compare this signal with a first threshold value (s1), characterised in that a first comparator (K1) is provided which compares the first movement variable (s) with a predetermined response threshold value (s2) and emits an output signal (k1) if the first movement variable (s) exceeds the response threshold value (s2),
in that a memory unit (R) is provided which calculates in a clocked fashion (clock T) the differential values (dw) between the second movement variable (w) obtained from the driven wheel and from the non-driven wheel,
in that a computing unit (SP) is provided which, in a clocked fashion, forms the sum (Sdw) from the differential values (dw) calculated by the computing unit (R),
in that a second comparator (K2) is provided which compares the sum (Sdw) with a predetermined maximum value (DW),
in that the summing in the memory unit (SP) lasts from the start of an output signal (k1) of the first comparator (K1) up to its end or to the start of an output signal (k2) of the second comparator (K2) and in that the sum (Sdw) formed in the memory unit (SP) is subsequently cleared, and
in that a flip-flop (FF) is provided which is set by the output signal (k2) of the second comparator (K2) and at the same time emits the control signal (H) and which is reset (signal B) when the threshold value (s1) is undershot by the first movement variable (s) or after a predetermined period of time.

## Revendications

1. Procédé pour déterminer des roues d'un véhicule qui patinent, au moyen d'un signal de commande (H) déterminé à partir des grandeurs de déplacement (vitesse de rotation, vitesse, glissement ou accélération) des roues, une première grandeur de déplacement (s) étant déterminée à partir des vitesses de rotation d'au moins une roue motrice et une roue non motrice et comparée à une valeur de seuil (s1), caractérisé par le fait
que la valeur de la différence (dw) entre une grandeur de déplacement (w) associée à une roue motrice et une seconde grandeur de déplacement (w) associée à une roue non motrice est déterminée de façon cadencée,
que les valeurs de la différence déterminées (dw) sont additionnées lorsque la première grandeur de déplacement (s) est supérieure à une valeur de seuil de réponse (s2),
que la somme (Sdw) des valeurs de la différence déterminées (dw) est comparée à une valeur maximale (DW) et
que le signal de commande (H) est déclenché lorsque la somme (Sdw) des valeurs de la différence (dw) est supérieure à la valeur maximale (DW).

2. Procédé suivant la revendication 1, caractérisé par le fait que la somme (Sdw) des valeurs de la différence déterminées (dw) est réglée à la valeur zéro lorsqu'elle dépasse la valeur maximale (DW) ou bien lorsqu'une grandeur dérivée des vitesses de rotation de roues tombe au-dessous d'une valeur prédéterminée.

3. Procédé suivant la revendication 2, caractérisé par le fait que la grandeur dérivée des vitesses de rotation de roues et que la valeur prédéterminée, susceptible d'être dépassée par valeurs inférieures, est la valeur de seuil (s1) ou la valeur de seuil de réponse (s2) inférieure à la valeur de seuil (s1).

4. Procédé suivant la revendication 1, caractérisé par le fait que le signal de commande (H) est déclenché lorsque la somme (Sdw) des valeurs de la différence déterminées (dw) dépasse la valeur maximale (DW) et que simultanément la première grandeur de déplacement (s) est supérieure à la valeur de seuil (s1).

5. Procédé suivant la revendication 1, caractérisé par le fait que le signal de commande (H) est effacé au bout d'une durée prédéterminée (signal B).

6. Procédé suivant la revendication 1, caractérisé par le fait que le signal (H) est effacé (signal B), lorsque la première grandeur de déplacement (s) tombe au-dessous de la valeur de seuil (s1) ou de la valeur de seuil de réponse (s2).

7. Procédé suivant la revendication 1, caractérisé par le fait que la seconde grandeur de déplacement (w) est la vitesse de la roue.

8. Procédé suivant la revendication 1, caractérisé par le fait que la seconde grandeur de déplacement (w) est l'accélération de la roue.

9. Dispositif pour la mise en oeuvre du procédé suivant la revendication 1, caractérisé par des moyens pour déterminer un signal de commande (H) à partir de grandeurs de déplacement (vitesse de rotation, vitesse, glissement ou accélération) des roues, ces moyens déterminant une première grandeur de déplacement (s) à partir des vitesses de rotation d'au moins une roue motrice et d'une roue non motrice (R1,R2) et comparant ce signal à une première valeur de seuil (s1), caractérisé par le fait qu'il est prévu un premier comparateur (K1), qui compare la première grandeur de déplacement (s) à une valeur de seuil de réponse prédéterminée (s2) et délivre un signal de sortie (k1) lorsque la première grandeur de déplacement (s) dépasse la valeur de seuil de réponse (s2),
qu'il est prévu une unité de calcul (R), qui calcule de façon cadencée (cadence T) les valeurs de différence (dw) entre la seconde grandeur de déplacement (w) déterminée par la roue motrice et par la roue non motrice,
qu'il est prévu une unité de mémoire (SP), qui forme de façon cadencée la somme (Sdw) à partir des valeurs de différence (dw) calculées par l'unité de calcul (T),
qu'l est prévu un second comparateur (K2) qui compare la somme (Sdw) à une valeur maximale prédéterminée (DW),
que la formation de la somme dans l'unité de mémoire (SP) dure depuis le début d'un signal de sortie (k1) du premier comparateur (K1) jusqu'à sa fin ou jusqu'au début d'un signal de sortie (k2) du second comparateur (K2) et qu'ensuite la somme (Sdw) formée dans l'unité de mémoire (SP) est effacée, et
qu'il est prévu un étage à bascule (FF), qui est positionné par le signal de sortie (k2) du second comparateur (K2) et délivre le signal de commande (H) et qui est ramené à l'état initial (signal B) lorsque la première grandeur de déplacement (s) tombe au-dessous de la valeur de seuil (s1) ou au bout d'une durée prédéterminée.
